# EUROPÄISCHE PATENTSCHRIFT

(11) **EP 3 241 443 B1**
(45) Veröffentlichungstag und Bekanntmachung des Hinweises auf die Patenterteilung: **09.10.2019**
(21) Anmeldenummer: 17168325.3
(22) Anmeldetag: 27.04.2017
(51) Int. Cl.: A22C 11/00, B26D 3/11

(54) **MASCHINE SOWIE VERFAHREN ZUM HERSTELLEN VON BRATWURST-SCHNECKEN**
MACHINE AND METHOD FOR PRODUCING SAUSAGE SWIRLS
MACHINE ET PROCÉDÉ DE FABRICATION DE SAUCISSES ENROULÉES

(30) Priorität: 28.04.2016 DE 102016107854
(43) Veröffentlichungstag der Anmeldung: 08.11.2017
(73) Patentinhaber: TVI Entwicklung und Produktion GmbH, 83737 Irschenberg (DE)
(72) Erfinder: Völkl, Thomas, 83052 Bruckmühl (DE); Stacheder, Max, 83052 Bruckmühl (DE)
(74) Vertreter: Weickmann & Weickmann PartmbB

(56) Entgegenhaltungen:
- EP-A1- 0 511 619
- WO-A1-2011/029435
- DE-A1- 10 233 068
- DE-B3-102005 030 471

## Beschreibung

Die Erfindung betrifft eine Maschine gemäß dem Oberbegriff des Anspruchs 1 sowie ein Verfahren gemäß dem Oberbegriff des Anspruchs 13 zum Herstellen von Bratwurst-Schnecken, also in einer Ebene spiralig aufgewickelter Bratwurst, die radial in ihrer Hauptebene durch einen hindurch gesteckten Spieß zusammen gehalten wird.

Derartige Bratwurst-Schnecken werden heute überwiegend in Handarbeit hergestellt, indem die Bratwurst auf einer Auflagefläche um ihr eines Ende gedreht wird, bis das andere Ende am Außenumfang der nächst inneren Wicklungslage anliegt, und dann manuell ein Spieß vom freien äußeren Endbereich aus radial durchs Zentrum der Bratwurst-Schnecke und aus dem gegenüber liegenden Außenumfang heraus ragend hindurch gesteckt wird.

Für eine Herstellung von Bratwurst-Schnecken in großer Anzahl ist diese Vorgehensweise zum einen zu teuer und ergibt zum anderen Bratwurst-Schnecken, die sich optisch zu stark voneinander unterscheiden.

Dabei versteht es sich von selbst, dass auch die Einheitlichkeit des Bratwurst-Rohlings einer der Faktoren für ein gleichmäßiges Aussehen der fertig hergestellten Bratwurst-Schnecke ist.

In diesem Zusammenhang ist aus der europäischen Patentanmeldung 0511619 A1 eine Vorrichtung zum automatischen Legen und Formen eines Wurstrohlings zu einer Wurstschnecke bekannt, bei der in einer Platte, die eine spiralige Rinne zum Aufnehmen des Wurstrohlings aufweist, der Wurstrohling abgelegt wird, indem der Abgabepunkt des Wurstrohlings sich relativ zu der drehenden Platte mit der Schneckenrinne so verfahren wird, dass der Wurstrohling darin zu liegen kommt. Die Schnecke wird anschließend von einem Spieß automatisch durchspießt. Der zugeführte Wurstrohling ist quasi endlos, und wird an der richtigen Stelle nach Ablegen in der Schnecken-Form abgeklemmt, sodass das Ende sich an der Umfangs-Stelle der Spießeinheit befindet.

Ferner ist aus der DE 102 33 068 81 A1, die den nächstreichenden Stand der Technik bildet, eine einzelne Vorrichtung zum Wickeln von Wurstschnecken bekannt, bei der der Anfang des strangförmigen Wurstrohlings - der auf einer Auflagefläche aufliegt - zwischen einer oberen und unteren Klemmbacke gehalten und um einen aufrecht stehenden Wickeldorn herum gewickelt wird, wobei sich die gesamte Auflagefläche und die Klemmbacken mitdrehen.

Vor dem anschließenden Durchspießen der Schnecke wird eine Deckelplatte auf die Oberseite der Schnecke aufgesetzt.

Es ist daher die Aufgabe gemäß der Erfindung, eine Vorrichtung und ein Verfahren zur Verfügung zu stellen, um Bratwurst-Schnecken zeitsparend mit geringem manuellem Aufwand herzustellen und dabei insbesondere eine hohe Übereinstimmung hinsichtlich Abmessungen und Aussehen der produzierten Bratwurst-Schnecken zu erzielen.

Diese Aufgabe wird durch die Merkmale der Ansprüche **1** und **13** gelöst. Vorteilhafte Ausführungsformen ergeben sich aus den Unteransprüchen.

Hinsichtlich des Verfahrens wird diese Aufgabe dadurch gelöst, dass der strangförmige Bratwurst-Rohling aufliegend auf einer Auflagefläche an einem Ende festgehalten wird und das festgehaltene Ende um eine lotrecht zu dieser Auflagefläche verlaufenden Wickel-Achse gedreht wird, insbesondere mithilfe einer Befestigungsvorrichtung, mit der das Ende des Rohlings an der Nabe gehalten wird. Die Auflagefläche dreht sich dabei vorzugsweise nicht mit der Wickel-Achse mit.

Dabei wird ein erster Anschlag an dem äußeren Umfang der sich durch Wickeln aufbauenden Schnecke in Kontakt gehalten und mit dem zunehmenden Abstand des äußeren Umfanges der entstehenden Schnecke zur Wickel-Achse automatisch nachgeführt, indem der Anschlag federnd in Richtung Wickelachse vorgespannt ist. Während des Wickelns kann sich die Wickelachse weiter bewegen.

Wenn der gesamte Rohling zu einer Schnecke gewickelt ist, wird die Schnecke durchspießt, also ein Spieß etwa auf halber Höhe der Dicke der Schnecke in der Mittel-Ebene der Schnecke durch die Schnecke hindurch geschoben, sodass der Spieß sich sowohl durch den äußeren Endbereich der Schnecke als auch durch den inneren Endbereich hindurch erstreckt, also vorzugsweise annähernd durch das geometrische Zentrum der Schnecke. Zu diesem Zweck wird die Schnecke soweit um die Wickel-Achse gedreht, dass sich der nicht mitdrehende Anschlag kurz vor dem Ende der äußersten Wicklung der Schnecke an dieser anliegt.

Vorzugsweise befindet sich beim Durchspießen der Spieß immer an der gleichen Ausgangsposition vor dem Hindurchschieben durch die Schnecke, und die Schnecke wird zusammen mit der Wickelachse in eine passende Position vor der dem Spieß gebracht.

Dabei wird auch darauf geachtet, dass der Spieß in seiner Verlaufsrichtung dann genau auf den Endbereich der äußersten Wicklung der Schnecke zielt, aber vorbeilaufend an dem Anschlag, und zwar in einem möglichst geringen Abstand, so dass der zu durchspießende Bereich der äußersten Wicklung noch eng an der nächstinneren Wicklung anliegt.

Dabei wird vorzugsweise auch überprüft, ob auf der Nabe/Auflagefläche, wenn sie sich vor dem Spieß befinden, also an der Spießposition, überhaupt eine Schnecke vorhanden ist.

Vorzugsweise geschieht dies, indem oberhalb und parallel zu der an dieser Position, der Spießposition, befindlichen Auflagefläche eine Tastfläche im Abstand zur Schnecke positioniert wird, die in der Höhe veränderbar ist mittels einer Aufhängung.

Durch Hochdrücken der Auflagefläche um eine Strecke, die größer ist als der ursprüngliche Abstand zwischen der Tastfläche und der Schnecke, aber nicht größer als die Summe aus dem Abstand und der Dicke der Schnecke, ergibt sich nur dann eine Anhebe-Bewegung der Tastfläche, die detektiert wird, wenn sich eine Schnecke auf der Auflagefläche befunden hat.

Das Durchspießen erfolgt vorzugsweise automatisch und so, dass der Spieß danach auf beiden einander gegenüber liegenden Außenflächen der Schnecke vorsteht, und sich sowohl durch den äußeren Endbereich als auch den inneren Endbereich der Schnecke erstreckt, der jeweils kürzer ist als der doppelte Durchmesser des Rohlings, besser nur als der 1,5-fache Durchmesser des Rohlings.

Anschließend kann die fertiggestellte und gespießte Schnecke entweder mittels der Auflagefläche hochgehoben oder von der Auflagefläche abgehoben werden, jedenfalls außer Eingriff von der Befestigungsvorrichtung gebracht werden, und weiter gehandhabt werden.

Beim Wickeln wird die entstehende oder auch bereits fertig gestellte Schnecke so lange gedreht, bis das äußere Ende der Schnecke am Umfang der nächst inneren Lage der Schnecke anliegt, und sich dieser anliegende Endbereich gegenüberliegend der Einspieß-Position der Schnecke befindet. Vorzugsweise wird die entstehende Schnecke während des Wickelns um die Wickelachse zwischen der Auflagefläche, auf der die entstehende Schnecke aufliegt, und einer Deckelfläche, die parallel zur Auflagefläche verläuft und die Unterseite einer Deckelplatte sein kann, mit geringem Spiel oder kontaktierend auch gegenüber der Deckelfläche gehalten.

Hinsichtlich der Maschine wird diese Aufgabe dadurch gelöst, dass die Maschine zunächst ein Grundgestell aufweist, in dem eine Nabe drehend antreibbar gelagert ist mit einer etwa lotrecht ausgerichteten Nabenachse und einer fluchtend zu der nach oben weisenden Stirnfläche der Nabe und um diese herum verlaufenden, etwa horizontal liegenden, stillstehenden Auflagefläche.

Ein endlicher, strangförmiger Bratwurst-Rohling kann so mit einem seiner Endbereiche mittels einer Befestigungsvorrichtung auf der nach oben weisenden Stirnfläche der Nabe befestigt werden, sodass der Rest des Rohlings von dort radial nach außen ragt und etwa radial über die Auflagefläche hinweg verläuft, die aber bei Drehung der Nabe um die Nabenachse, also die Wickelachse, nicht mit dieser mitdreht. Durch Drehen der Nabe mit dem daran festgehaltenen Endbereich wird aus dem strangförmigen Rohling so eine in einer etwa horizontalen Ebene liegende Bratwurst-Schnecke gewickelt.

Die Maschine umfasst ferner, vorzugsweise an einer fixen Position, eine Spießeinheit, mit Hilfe der ein meist aus Holz bestehender Spieß durch die fertig gewickelte Bratwurstschnecke in oder parallel zur Hauptebene der Bratwurstschnecke hindurch geschoben werden kann.

Die Maschine umfasst vorzugsweise ferner eine Deckelplatte, die beabstandet oberhalb der Auflagefläche, welche meist die Oberseite einer Auflageplatte ist, in einem Abstand angeordnet ist, der gleich oder geringfügig größer als die Dicke der zu verarbeitenden Rohlinge ist.

Ferner umfasst die Maschine vorzugsweise ein zweites Anschlagelement mit einer Anschlagfläche, die beabstandet zur Nabenachse, der Wickelachse, und vorzugsweise parallel zu dieser verlaufend angeordnet ist.

In einer bevorzugten Ausführungsform weist die Maschine nicht nur eine, sondern mehrere solcher Naben auf und/oder eine Transportvorrichtung, in der die wenigstens eine Nabe in einer Transportrichtung bewegt werden kann, insbesondere entlang einer Führung, wobei die Transportrichtung lotrecht zur Richtung der Nabenachse verläuft und vorzugsweise in einer horizontalen Ebene.

Vorzugsweise sind eine Vielzahl von Naben mit zugehörigen umgebenden Auflageflächen entlang der Transportvorrichtung automatisch bewegbar, insbesondere unabhängig voneinander bewegbar oder auch nach Art einer Kette in Transportrichtung miteinander verbunden.

Vorzugsweise ist die Transportvorrichtung so ausgebildet, dass die Transportbewegung der Nabe automatisch eine Drehbewegung der Nabe um die Nabenachse bewirkt.

So kann die Transportrichtung eine gebogene, umlaufende Richtung, insbesondere eine in der Aufsicht betrachtete Kreisbahn, sein. Die von der Transportvorrichtung bewegten Naben können auch mittels einer Zahnradverbindung in Transportrichtung bewegt werden, die insbesondere bei einer kreisbahn-förmigen Transportrichtung, welche die Umlaufrichtung des Umfanges eines Rundtisches sein kann und rollen auf diesem Umfang ab. Vorzugsweise ist auf dem Umfang des Rundtisches dann eine Verzahnung angeordnet, die mit einer auf dem Umfang der Nabe, vorzugsweise unterhalb der Auflagefläche, angeordneten Außenverzahnung, kämmt.

Anstelle einer Verzahnung sind auch kraftschlüssige Verbindungen, also Reibrollen und Reibflächen, verwendbar.

Die Maschine umfasst dabei mehrere Arbeitsstationen:
- Eine Einlegestation zum Einlegen und Befestigen eines Endbereiches des Rohlings an der Befestigungsvorrichtung der Nabe,
- eine Wickelstation zum Wickeln der Schnecke aus dem Rohling,
- eine Spießstation zum automatischen Durchspießen der fertig gewickelten Schnecke mit einem Spieß,
- eine Auswurfstation zum vorzugsweise radialen Auswerfen der fertigen, gespießten Schnecke auf ein Abfördermittel, beispielsweise ein Förderband.

So können an der Einlegestation, meist manuell, nacheinander an jeder an der Einlegestation haltenden oder vorbei fahrenden Nabe an deren Befestigungsvorrichtung ein Rohling mit seinem einen Endbereich befestigt werden, und durch das Weiterfahren der Naben wird automatisch die Schnecke gewickelt bis nach dem Fertigstellen der Schnecke an der Spießstation das Durchspießen erfolgt und später das Auswerfen an der Auswurfstation. Dafür wird vorzugsweise die Auflagefläche, welche die Oberseite einer Auflageplatte ist, die sich um die Nabe herum erstreckt - und die zwar mit der Nabe, die sie umgibt, mit transportiert wird, aber nicht mit der Nabe mitdreht - angehoben bis über das obere Ende der Befestigungsvorrichtung hinaus, sodass dann die Schnecke radial nach außen mittels eines Auswerfers auf das Abfördermittel geschoben werden kann.

Denn vorzugsweise besteht die Befestigungsvorrichtung aus Haltestiften, die gleichmäßig um die Nabenachse herum verteilt von der Stirnfläche der Nabe aus nach oben ragen, wobei es sich vorzugsweise um eine gerade Anzahl von Haltestiften handelt, vorzugsweise vier Haltestifte oder sechs Haltestifte, und der gegenseitige Abstand der Haltestifte gleich oder geringer gewählt ist als die Dicke eines Bratwurst-Rohlings, dessen Endbereich ja zwischen zwei benachbarten Paaren von Haltestiften von oben her eingesteckt werden soll und aufgrund des vorherigen Zusammendrückens durch den Bediener dort mit Vorspannung gehalten wird.

Der Abstand zwischen den benachbarten Haltestiften, zwischen denen der Rohling eingesteckt werden soll, ist 40 % bis 5 %, besser 30 % bis 10 %, besser 25 % bis 15 % geringer als die Dicke des Rohlings.

Vorzugsweise sind die Haltestifte in ihrem radialen Abstand zur Nabenachse einstellbar, insbesondere gemeinsam einstellbar.

Die Maschine umfasst ferner eine Anschlagfläche, die bei einem Rundtisch entlang eines Kreissegmentes des Rundtisches verläuft, vorzugsweise radial innerhalb der Transportvorrichtung, entlang der sich die Naben bewegen, und von der Höhe der Auflagefläche aus nach oben aufragt über mindestens eine Strecke, die der größten Dicke der zu handhabenden Rohlinge entspricht. In Transportrichtung nimmt der Abstand der Anschlagfläche zur Nabenachse zu, jedoch ist vorzugsweise die Anschlagfläche nicht starr montiert, sondern in radialer Richtung bezüglich der Transportrichtung und damit auch der Nabenachsen beweglich, insbesondere gefedert und vorgespannt in Richtung Transportrichtung, also in Richtung der darauf transportierten Naben mit ihren Nabenachsen.

Eine Deckelplatte ist vorzugsweise entlang eines Kreissegmentes eines solchen Drehtisches in der Aufsicht betrachtet oberhalb der Bewegungsbahn, entlang der sich die Auflageflächen bewegen, vorhanden, und zwar in einem solchen vertikalen Abstand, der gleich oder nur geringfügig größer ist als die Dicke des zu verarbeitenden Rohlings, um zu verhindern, dass eine Wicklung aus der einzigen gewünschten Wicklungsebene heraus gerät und in eine zweite Wicklungsebene beabstandet zur gewünschten Wicklungsebene verlagert wird.

Vorzugsweise beginnt die Deckelplatte stromabwärts des Beginns des dritten Anschlagelementes, und/oder endet vorzugsweise stromaufwärts des Endes dritten des Anschlagelementes.

Ferner umfasst die Maschine eine Steuerung, die in der Lage ist, alle beweglichen Teile der Maschine anzusteuern, und insbesondere in der Lage ist, zu erkennen, dass sich die fertiggestellte Schnecke in einer solchen Drehlage relativ zur Maschine und/oder zur Wickelachse der Nabe, befindet, dass der Spieß mittels der vorzugsweise radial außerhalb der Transportvorrichtung für die Naben angeordneten Spießeinheit durch den außenseitigen Endbereich der Schnecke hindurch eingeschoben werden kann und sich dabei auch durch den innen liegenden Endbereich der Schnecke hindurch erstreckt.

Mit Endbereich ist dabei ein Bereich von maximal 5 cm, besser nur 3 cm, besser nur 2 cm, vom Ende der Schnecke, gemessen in Verlaufsrichtung der Wicklung der Schnecke, also des Rohlings, gemeint.

### c) Ausführungsbeispiele

Ausführungsformen gemäß der Erfindung sind im Folgenden beispielhaft näher beschrieben. Es zeigen:
- Figur 1a:: die Maschine in einer perspektivischen Ansicht,
- Figur 1b:: die Maschine in der Front-Ansicht, also der Figur 1a von der linken unteren Ecke der Darstellung aus betrachtet,
- Figur 2a:: die Maschine der Figur 1a in der Aufsicht von oben,
- Figur 2b:: die Maschine der Figur 1a in der Aufsicht von oben, wobei die Überbauten oberhalb des Rundtisches und der darum herum angeordneten Naben und Auflageflächen entfernt sind,
- Figur 3:: die Einlege-Station in der Vergrößerung,
- Figur 4:: die Wickelstation in der Vergrößerung,
- Figur 5:: die Spießstation in der Aufsicht in der Vergrößerung.

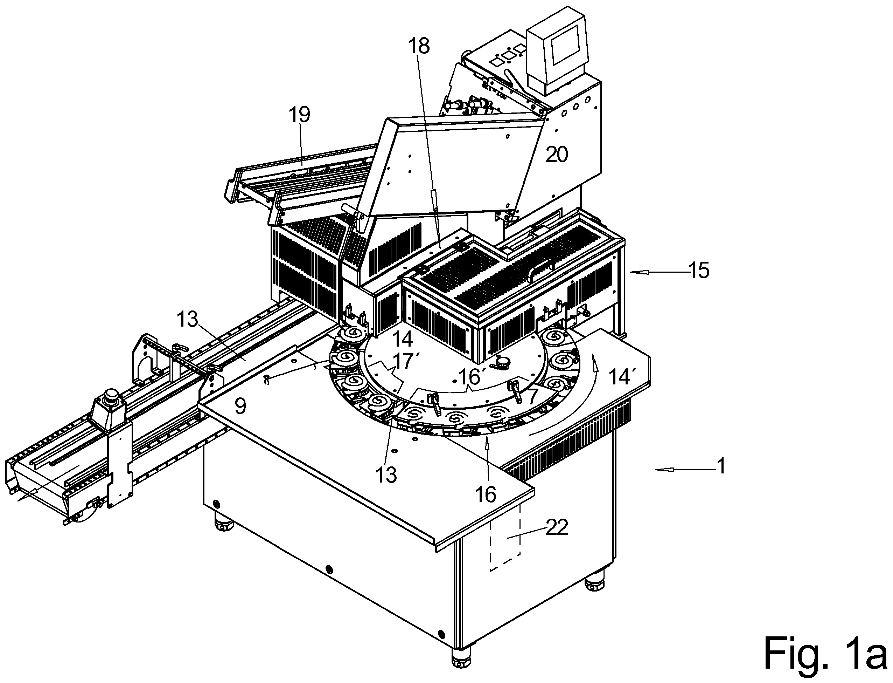

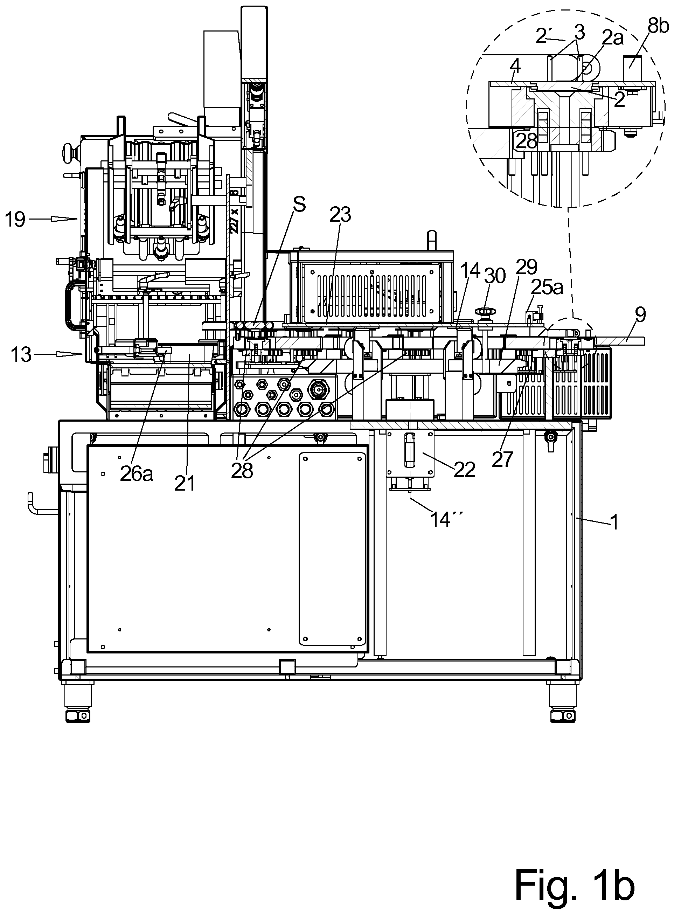

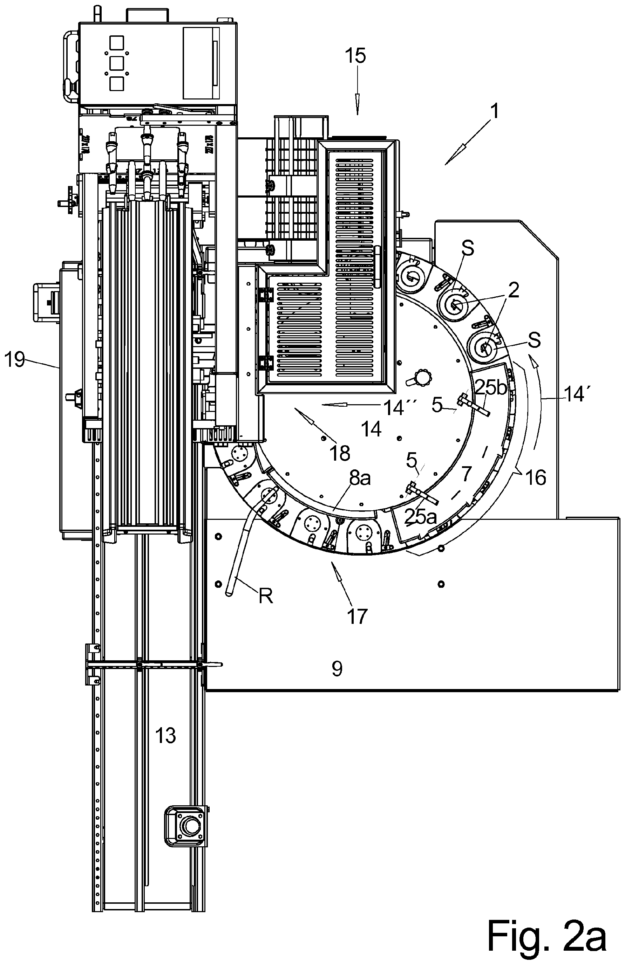

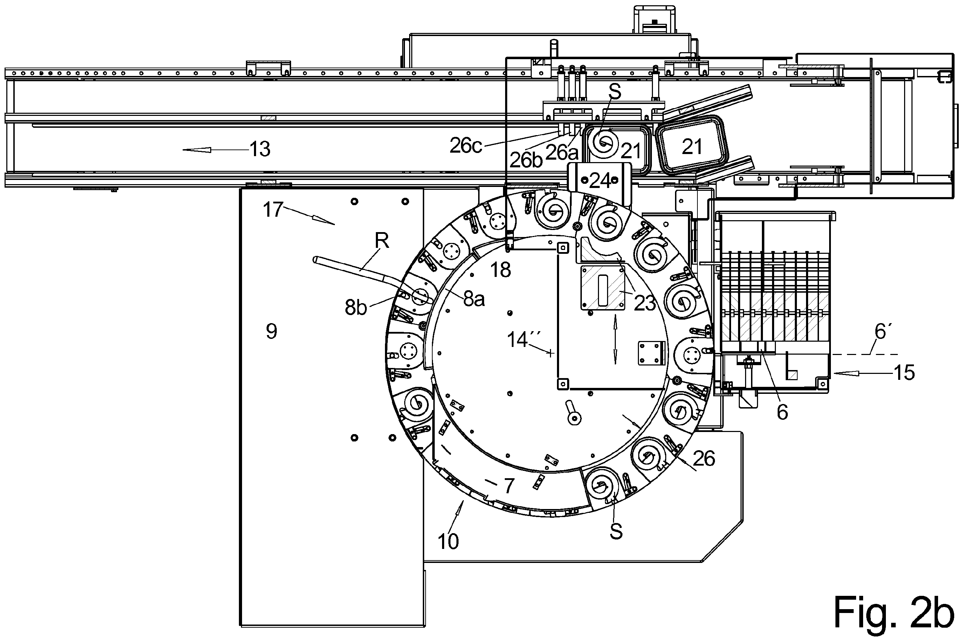

In den Figuren 1a, b sowie Figuren 2a, b ist der Rundtisch 14 mit seiner horizontal angeordneten Oberseite und mit seinem kreisförmigen Außenumfang zu erkennen, um dessen Außenumfang herum eine Vielzahl von Naben 2, die um eine vertikale Nabenachse 2', der Wickelachse jeder Nabe 2, drehend antreibbar sind, angeordnet mit ihrer Stirnfläche 2a nach oben weisend.

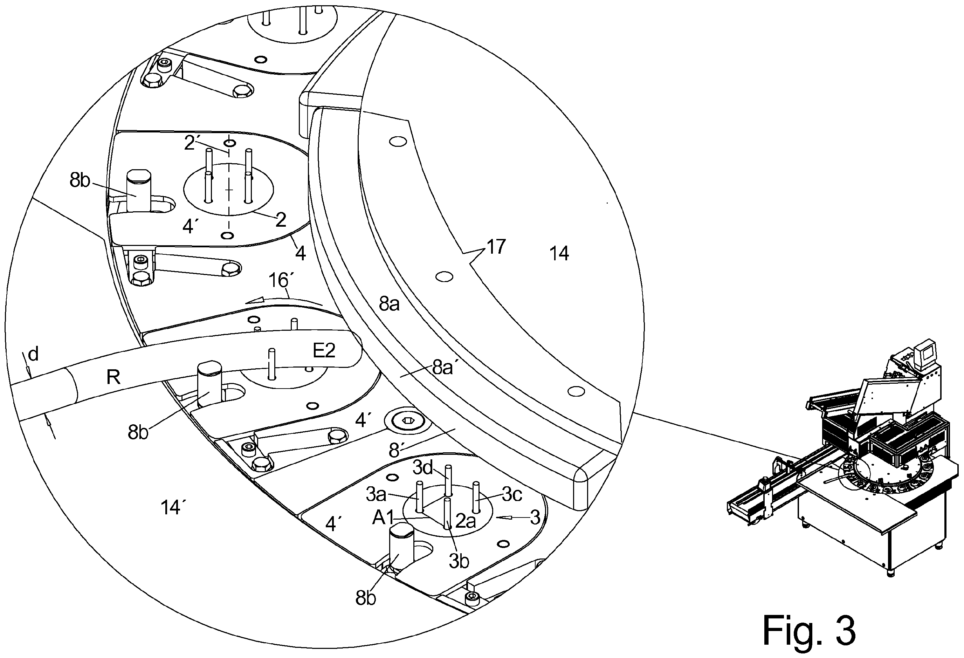

Wie am besten Figur 3 erkennen lässt, ist die Stirnfläche 2a jeder Nabe 2 von einer fluchtend, also auf gleicher Höhe und ebenfalls horizontal liegenden, Auflagefläche 4' - der Oberseite einer Auflageplatte 4 - umgeben, deren Durchmesser größer ist als der Durchmesser einer fertigen Schnecke S.

Jede Nabe 2 mit umgebender Auflageplatte 4 wird entlang der Umlaufrichtung 14', also der Transportrichtung 12', mittels einer Transportvorrichtung 12 schrittweise um den Rundtisch 14 herum im Kreis bewegt, wobei sich die Auflageplatte 4 nicht zusammen mit der Nabe 2 um die vertikal stehende Nabenachse 2' oder eine andere vertikale Achse dreht oder schwenkt, sondern bezüglich der Nabenachse 2' still steht.

Die einzelnen Naben 2 sowie die sie umgebenden Auflageplatten 4 sind in Umlaufrichtung 14' miteinander verbunden, vorzugsweise
- entweder verkettet und vorzugsweise auf gleichen Abstand in Umlaufrichtung 14' gehalten und werden vorzugsweise entlang einer nicht sichtbaren Führung, die konzentrisch um die Rundtisch-Achse 14" verläuft und die ebenfalls vertikal steht, im Kreis geführt
- oder auf dem Außenumfang eines um die Rundtisch-Achse 14" drehend antreibbaren Naben-Trägers angeordnet, wie in Figur 1b ersichtlich.

Es handelt sich dabei also um einen geschlossenen Umlauf, der wegen der darüber angeordneten Maschinenmodule nicht vollständig sichtbar ist.

Der Rundtisch 14 und die Transportvorrichtung 12, mit der die Naben 2 in Transportrichtung 12, hier der kreisförmigen Umlaufrichtung 14', transportiert werden, sind an einem Grundgestell 1 der Maschine angeordnet.

In den Figuren 2a, b ist zu erkennen, dass in der Umlaufrichtung 14' - in der Aufsicht betrachtet in diesem Fall entgegen dem Uhrzeigersinn - hintereinander mehrere Arbeitsstationen vorhanden sind, nämlich die Einlegestation 17, die Wickelstation 16, die Spießstation 15 und die in Figur 2a, b am linken Rand vorhandene Auswurfstation 18.

Das Herstellen der Bratwurst-Schnecken S geht wie folgt vor sich, wobei die Naben 2 vorzugsweise getaktet und nicht permanent in Umlaufrichtung 14' transportiert werden.

Im Bereich, also einem Segment des Außenumfanges des Rundtisches 14, der Einlegestation 17 wird von einem Bediener auf der Stirnfläche 2a jeder der an ihm vorbei transportierten Naben 2 - wie besser in Figur 3 ersichtlich - ein Endbereich E2 eines strangförmigen Rohlings R an der Befestigungsvorrichtung 3 auf der Stirnfläche 2a einer Nabe 2 befestigt, so dass sich der Rest des strangförmigen Rohlings R radial über die umgebende Auflagefläche 4' hinweg erstreckt und auf dieser aufliegt.

Um Verletzungen zu vermeiden, ist die Befestigungsvorrichtung 3 nur mit einer maximalen Haltekraft an der Nabe 2 drehfest befestigt, insbesondere indem die beiden Teile mit jeweils einem von zwei drehfest aneinanderhaftenden Magneten ausgestattet sind, und bei Überschreiten der Haltekraft der beiden Magnete aneinander die Wirkverbindung zwischen Nabe 2 und Befestigungsvorrichtung 3 gelöst wird.

Im Bereich der Einlegestation 17 im Abstand und konzentrisch zum Außenumfang des Rundentisches 14 befindet sich eine Arbeitsplatte 9, die sich auf gleicher Höhe und fluchtend zur Oberfläche des Rundtisches 14 erstreckt, so dass dazwischen ein Transportkanal vorhanden ist, entlang dem die Auflageplatten 4 mit je einer darin drehbar gelagerten Nabe 2 bewegt werden.

Im Bereich der Einlegestation 17 ist weiterhin entlang des Außenumfanges des Rundtisches 14 verlaufend und von dem Niveau der Auflagefläche 4' nach oben aufragend eine Anschlagfläche 8'a eines ersten Anschlagelementes 8a vorhanden, die dem Bediener als Anschlag dafür dient, wie weit er den strangförmigen, radial von außen herangeführten Rohling R über die Stirnfläche 2a der Nabe 2 hinaus nach radial innen zur Mitte des Rundtisches 14 hin beim Einlegen reichen lassen darf.

Wie in Figur 3 zu erkennen, sind auf jeder Stirnfläche 2a einer Nabe 2 um deren Nabenachse 2' gleichmäßig verteilt und zu dieser beabstandet vier Haltestifte 3a-d als Befestigungsvorrichtung 3 vorhanden, die von der Stirnfläche 2a vertikal nach oben ragen und deren gegenseitiger Abstand A1 kleiner ist als die Dicke d des Bratwurstrohlings R, sodass der Einleger den Endbereich E2 des Bratwurstrohlings R, den er vorzugsweise zwischen zwei beabstandete Paare der Haltestifte, also genau radial verlaufend, einlegen will, vorher zusammendrücken muss, um sie von oben zwischen die nach oben frei auslaufenden Haltestifte einzulegen und hineinzudrücken.

In Umlaufrichtung 14' am Ende der Einlegestation 17, die sich über ein Einlege-Segment 17' des Rundtisches 14 erstreckt, endet vorzugsweise auch der erste, radial innere Anschlag 8a, hier als konzentrisch um die Mittelachse 14" des Rundtisches 14 verlaufend dargestellt.

Durch Weitertransportieren in Transportrichtung 12', der Umlaufrichtung 14', gelangen die Naben 2 mit daran befestigten Rohlingen R und jeweils mit die Nabe 2 umgebender Auflagefläche 4' in den Bereich der Wickelstation 16, die ebenfalls ein bestimmtes Segment um den Rundtisch 14 herum definiert. Die Naben 2 drehen sich um ihre Nabenachse 2', die Wickelachse, erst im Bereich der Wickelstation 16 immer dann, wenn sie in Umlaufrichtung 14' mittels einer Transportvorrichtung 12 weiter bewegt werden.

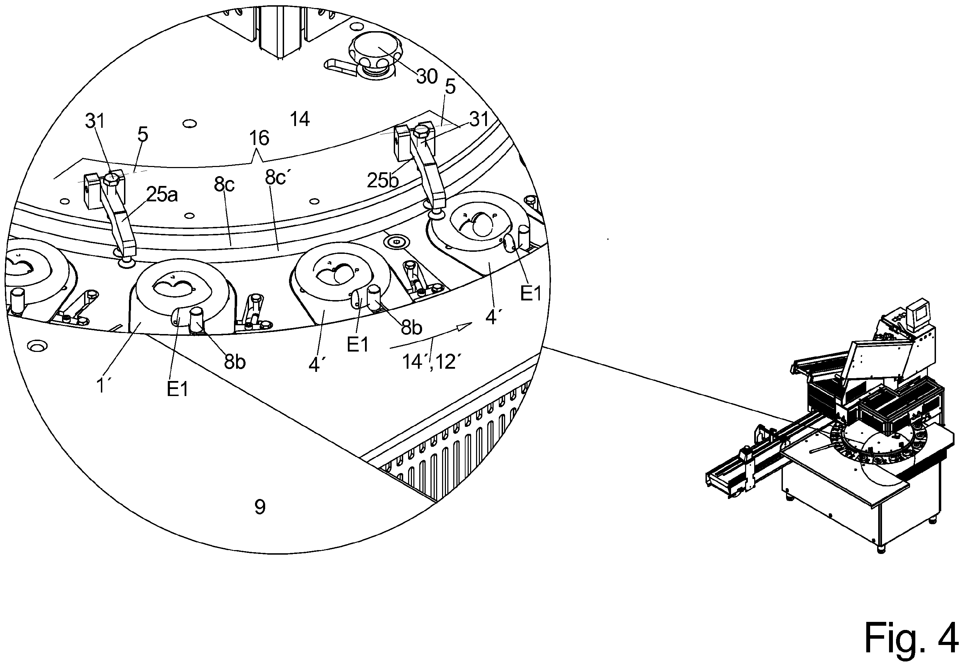

Vorher können sich die Naben 2 vorzugsweise noch gar nicht gedreht haben, da der Drehantrieb für die Naben 2 erst am Ende des Einlegebereiches 17 und am Beginn der Wickelstation 16 einsetzt, die in Figur 4 dargestellt ist:

Wie in Figur 1b dargestellt, kann der Drehantrieb für die Naben 2 auf sehr einfache Weise dadurch erfolgen, dass auf dem Außenumfang des Rundtisches 14 im Bereich der Wickelstation 16, und unterhalb dem Niveau von dessen Oberfläche, also dem Niveau der Auflageflächen 14', eine umlaufende Verzahnung in Form einer bogenförmigen Zahnstange 27 aufgebracht ist, und ebenso die Naben 2a unterhalb ihrer Stirnfläche an ihrem Außenumfang eine drehfest mit der Nabe 2 verbundene, dazu passende, konzentrisch zur Nabenachse 2' umlaufende, mit der Zahnstange 27 kämmende Verzahnung in Form eines Ritzels 28 aufweisen, die mit der Zahnstange 27 auf dem Umfang des Rundtisches 14 kämmt.

Sobald also die Naben 2 in Umlaufrichtung 14' weiter transportiert werden mittels eines Transportantriebes 22, rollen die Ritzel 28 der Naben 2 auf der Zahnstange 27 des still stehenden Rundtisches 14 ab und drehen sich dadurch bei ihrer Weiterbewegung, insbesondere schrittweiser Weiterbewegung, um die eigene Naben-Achse 2' und die Schnecke S beginnt zu entstehen.

Dabei ist exzentrisch zur Nabenachse 2', vorzugsweise der Nabenachse 2' etwas voreilend, aus der Auflagefläche 4' nach oben aufragend ein zweites Anschlagelement 8b in Form eines nach oben aufragenden Anschlag-Zapfens angeordnet, welches vorzugsweise aus einem auf der Außenseite der Auflageplatte 4 mündenden Schlitz nach oben ragt und in Richtung mittlerer Bereich der Auflageplatte 4 federnd vorgespannt ist.

Dadurch drückt dieses zweite Anschlagelement 8b mit seiner Anschlagfläche 8b' die äußerste Wicklung, also Lage, der entstehenden Schnecke S in Richtung Nabe 2 und insbesondere in Richtung Nabenachse 2' und verhindert dadurch eine zu lockere Wicklung der Schnecke S.

Wie in Figur 1a, b erkennbar, ist über den Wickelbereich 16' der Wickelstation 16 in der Aufsicht betrachtet oberhalb des Transportkanals und im Abstand oberhalb der Auflageflächen 4' eine Deckelplatte 7 an Deckelhaltern 25a, b gehalten, die sich knapp oberhalb der sich bildenden Schnecke S und ggf. diese mit ihrer Unterseite kontaktierend, befindet und verhindert, dass eine Wicklung der Schnecke S nicht in der Mittelebene S' verbleibt, weshalb dieser Abstand A2 gleich oder nur wenig größer als die Dicke d des Rohlings R gewählt ist und natürlich einstellbar ist.

Vorzugsweise lastet die Deckelplatte 7 auch einfach mit ihrem Eigengewicht auf der Oberseite der entstehenden Schnecken S, indem die Deckelhalter 25a, b um eine horizontale Schwenkachse 5 schwenkbar an ihrem hinteren Ende auf der Oberseite des Rundtisches 14 befestigt sind, während sie mit ihrem freien Ende die Deckelplatte 7 auf deren Oberseite halten.

Aus Übersichtlichkeitsgründen ist in der vergrößerten Darstellung der Figur 4 für die Wickelstation 16 diese Deckelplatte 7 weggelassen, sodass zu erkennen ist, dass in diesem Bereich ein drittes Anschlagelement 8c mit einer Anschlagfläche 8c' auf der Innenseite des Transportkanals vorhanden ist, die entlang des Außenumfanges des Rundtisches 14 verläuft und vertikal aufragt.

In der Aufsicht betrachtet verläuft die bogenförmig gekrümmte Anschlagfläche 8c' nicht konzentrisch zur Mitte des Rundtisches 14, sondern mit einem leicht abnehmenden Abstand zur Tischmitte 14" in Transportrichtung 12', der Umlaufrichtung 14'.

Am Ende der Wickelstation 16 oder am Anfang der in Umlaufrichtung 14' nachfolgenden Spießstation 15 wird geprüft, beispielsweise mittels einer optischen oder mechanischen Detektionseinrichtung, ob das auf der Außenseite des Transportkanals aus der Auflagefläche 4' aufragende zweite Anschlagelement 8b an der äußersten Lage der Schnecke S, also der äußersten Wicklung, kurz vor deren äußeren Endbereich E1 anliegt.

Sobald dies der Fall ist, wird der Freilauf der entsprechenden Nabe 2 aktiviert, also entweder die Nabe 2 von dem um die Nabenachse 2' angeordneten Ritzel 28 entkoppelt, oder das Ritzel 28 auf andere Art und Weise von der Zahnstange 27 entkoppelt.

Eine Möglichkeit besteht darin, dass die in der Aufsicht betrachtet gekrümmte Zahnstange 27 zweiteilig ausgebildet ist mit einer Unterbrechung etwa am Übergang von der Wickelstation 16 zur Spießstation 15, wobei der in Transportrichtung 12' nachfolgende Stangen-Teil schwenkbar um eine vertikale Schwenkachse am hinteren, dem ersten Stangen-Teil benachbarten, Ende ist. Je mehr mittels eines gesteuerten Hebels das andere, freie Ende des zweiten Stangen-Teiles radial nach innen in Richtung Tisch-Mitte 14" verschwenkt wird, umso früher kommt das sich in Transportrichtung 12' bewegende Ritzel der Nabe 2 außer Eingriff.

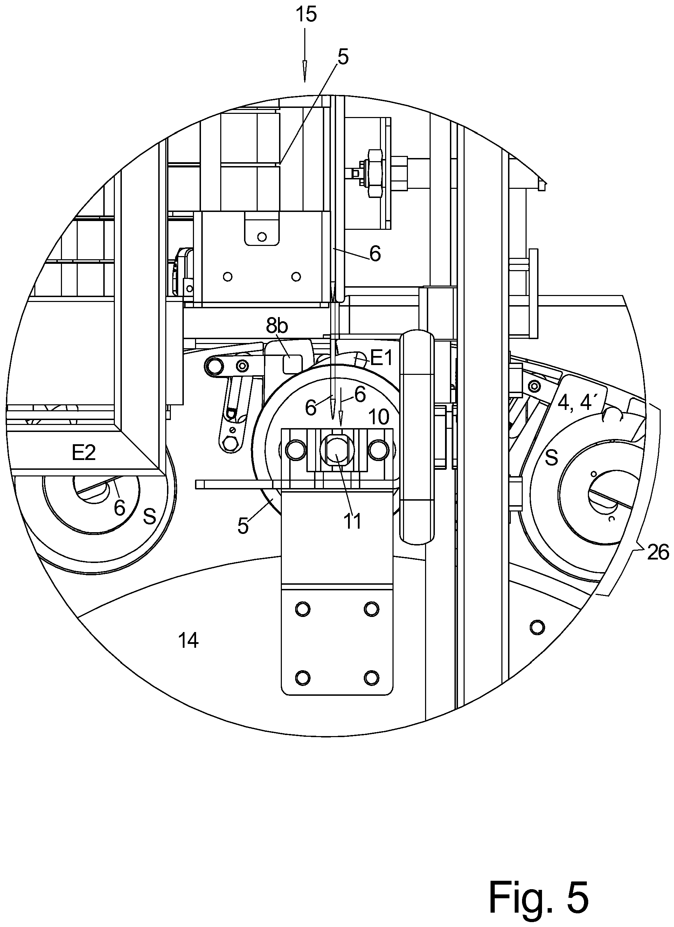

Jedenfalls dreht beim Weitertransport in Transportrichtung 12', der Umlaufrichtung 14', sich die Nabe 2 nicht weiter und dieser Zustand wird beibehalten, bis sich die Nabe 2 durch Weitertransport an einer definierten SpießPosition 15' in der Spießstation 15 befindet, welche in der Figur 5 in der Aufsicht von oben vergrößert dargestellt ist:
Dort ist gut zu erkennen, dass nunmehr der radial äußere, nach innen gefederte, zweite Anschlag 8b zwar am äußeren Endbereich E1 der Schnecke S anliegt, aber an einem solchen Punkt, dass das bis zum absoluten äußeren Ende der Bratwurst-Schnecke S verbleibende Stück ausreicht, um hierdurch einen Spieß 6 radial von außen in Richtung Mitte des Rundtisches 14 einzuschieben, ohne mit dem radial äußeren Anschlagelement 8b in Form des aufragenden Zapfens zu kollidieren.

In dieser Lage ist auch sichergestellt, dass der Spieß 6 - der radial außen bzgl. des Transportkanals angeordnet ist und automatisch, etwa auf halber Höhe der Dicke d der Schnecke S, eingeschoben wird - einerseits auch den inneren Endbereich E2 der Schnecke S hindurchdringt und dennoch nicht mit den Haltestiften 3a-d kollidiert, sondern der Spieß 6 durch zwei zueinander beabstandete Paare dieser Haltestifte 3a, b, und 3c, d hindurch verläuft, bis er aus dem gegenüber liegenden Außenumfang der Schnecke S wieder austritt.

Dies kann erreicht werden, indem das Wickeln der Schnecke S nur beendet wird in einer solchen Drehlage der Nabe 2 um die Wickelachse 2', dass zwischen den Haltestiften 3a-d hindurch ein ausreichend breiter Kanal besteht, der in Spießrichtung 6', der Verlaufsrichtung des Spießes 6 beim Spießen, verläuft.

In Figur 5 ist weiterhin die oberhalb der Schnecke S angeordnete Detektor-Platte 10 zu erkennen, die die Oberfläche der Schnecke S weitestgehend abdeckt, und die mit einem darüber angeordneten Hub-Sensor 11 gekoppelt ist.

Ferner ist in der Spießstation 15 an der Spießposition unterhalb der Auflageplatte 4, auf der die Schnecke S dort aufliegt, eine nicht dargestellte HubVorrichtung vorhanden, die in der Lage ist, die Auflageplatte 4 anzuheben um eine definierte Strecke, die ausreicht, um die Detektor-Platte 10 unter Vermittlung der normalerweise dazwischenliegenden Schnecke S ebenfalls hochzudrücken, was wiederum von dem Hub-Sensor 11 registriert wird.

Findet eine solche Anhebung der Detektor-Platte 10 nicht statt und liefert deren Hub-Sensor 11 somit kein Signal, so wird anschließend kein Durchspießen vorgenommen, denn kein Signal bedeutet, dass sich auf der Auflageplatte 4 keine Schnecke S befand.

Dies ist durchaus einkalkuliert, indem die Taktzeit für die Transportvorrichtung 12 so schnell eingestellt werden kann, dass ein Bediener es zwar in den meisten Fällen, aber nicht in allen Fällen, schafft, im Einlegebereich in jede Nabe 2, also deren Befestigungsvorrichtung 3, einen Rohling R einzulegen.

Das Durchspießen kann in der angehobenen Position der Auflageplatte 4 oder in der wieder abgesenkten Position der Auflageplatte 4 stattfinden, wobei natürlich der Spieß 6 in der Spießstation 15 für das Durchspießen der Schnecke S auf der entsprechenden Höhe geführt werden muss.

Die Nabe 2 und Auflagefläche 4' wird mit der darauf aufliegenden, nun durchspießten, Schnecke S von der Transportvorrichtung 12 weiter transportiert zur Auswurfstation 18, die am besten in Figur 2b zu erkennen ist.

Dort wird die fertig gestellte und durchspießte Schnecke S mittels einer dort ebenfalls vorhandenen Hubvorrichtung, die die Auflageplatte 4 anheben kann, über das obere Ende der Haltestifte 3a - d hinaus angehoben und mit einem Auswerfer 23 radial nach außen auf eine schräg abwärts gerichtete Rutsche 24 geschoben, von wo aus die Schnecke S über das Ende der Rutsche 24 in eine darunter exakt positionierte Schale 21 fällt.

Die Schalen 21 werden ineinander genestet und mit der Stapelrichtung schräg nach unten gerichtet auf einer schrägen Vorratsfläche abgelegt und mittels eines Vereinzelers 19 einzeln von dem Stapel getrennt und einzeln auf dem Abförderer 13, einem Förderband, in dessen Laufrichtung hintereinander abgelegt.

Die Schnecken S sollen - vorzugsweise mehrere geschindelt und somit teilweise einander überlappend - in einer Schale 21 abgelegt werden.

Zu diesem Zweck wird eine erste Schale 21 an einem von mehreren in den Bewegungsweg der Schalen 21 hinein ragenden Stopper 26a, b, c angehalten in einer solchen Position, dass die nächste von der Rutsche 24 herabfallende Schnecke S in der gewünschten Erst-Position, definiert durch den ersten Stopper 26a, in der Schale 21 auftrifft.

Anschließend wird dieser erste Stopper 26a aus dem Bewegungsweg der Schale 21, also quer zur Transportrichtung des Abförderers 13, entfernt, so dass die Schale 21 vorwärts fährt bis zum nächsten im Bewegungsweg befindlichen Stopper 26b, welcher der Zweit-Position für die nächste abzuwerfende Schnecke S entspricht.

Im dargestellten Fall wiederholt sich dies ein weiteres Mal an dem in diesem Fall letzten Stopper 26c, da die Ablage von drei Schnecken S in einer Schale 21 vorgesehen ist.

Nach Zurückziehen des letzten Stoppers 26c verlässt die Schale 21 entlang des Abförderers 13 die Maschine, jedoch fährt unmittelbar hinter dem Passieren des Endes dieser Schale 21 der erste Stopper 26a wieder aus in die aktivierte Stellung im Bewegungsweg der Schalen 21, und stoppt die nachfolgende nächste leere Schale 21 in dieser Erst-Position für das Befüllen.

Auf diese Art und Weise kann mit einem einzigen Bediener an der Einlege-Station 17 und gegebenenfalls einem weiteren zweiten Bediener an der Spießstation 18 pro Zeiteinheit eine mehrfache Menge an Bratwurst-Schnecken hergestellt werden wie bei manueller Herstellung.

Die Rohlinge R werden dem Bediener an der Einlegestation 17 in der Regel in einer Kiste liegend zur Verfügung gestellt.

### BEZUGSZEICHENLISTE

- 1: Grundgestell
- 2: Nabe
- 2a: Stirnfläche
- 2': Nabenachse, Wickelachse
- 3: Befestigungsvorrichtung
- 3a - d: Haltestift
- 4: Auflageplatte
- 4': Auflagefläche
- 5: Schwenkachse
- 6: Spieß
- 6': Spiessrichtung
- 7: Deckelplatte
- 7': Deckelfläche
- 8a - c: Anschlagelement
- 8a' - c': Anschlagfläche
- 9: Arbeitstisch
- 10: Detektor-Platte
- 11: Hub-Sensor
- 12: Transportvorrichtung
- 12': Transportrichtung
- 13: Abförderer
- 14: Rundtisch
- 14': Umlaufrichtung
- 14": Rundtisch-Achse
- 15: Spieß-Station
- 16: Wickel-Station
- 17: Einlege-Station
- 17': Einlegesegment
- 18: Auswurf-Station
- 19: Schalenspender
- 20: Steuerung
- 21: Schale
- 22: Transportantrieb
- 23: Auswerfer
- 24: Rutsche
- 25 a, b: Deckelhalter
- 26a - c: Stopper
- 27: Zahnstange
- 28: Ritzel
- 29: Schwenkhebel
- 30: Bedienelement
- 31: Einstellschraube

- A1: Abstand
- A2: Abstand
- E1: Äußeres Ende
- E2: Inneres Ende
- d: Dicke
- R: Rohling
- S: Schnecke
- S': Mittel-Ebene

## Patentansprüche

1. **Maschine** zum Herstellen von Bratwurst-Schnecken (S) aus einem endlichen Bratwurst-Rohling (R) mit
- einer drehend antreibbaren Nabe (2) mit einer zentral angeordneten Befestigungsvorrichtung (3) auf der lotrecht zur Nabenachse (2') liegenden Stirnfläche (2a) für den Rohling (R) und die daraus entstehende Bratwurst-Schnecke (S),
- einer Spießstation (15) zum automatischen Hindurchschieben eines Spießes (6) durch die Bratwurst-Schnecke (S),
**dadurch gekennzeichnet, dass**
- um die Stirnfläche (2a) der Nabe (2) herum eine zur Nabe (2) stillstehende Auflagefläche (4') vorhanden ist,
- ein aus der Auflagefläche (4') nach oben aufragendes Anschlagelement (8b) vorhanden ist, dessen Anschlagfläche (8'a) einen variablen Abstand zur Nabe (2) besitzt und an einer Stelle des äußeren, während des Wickelns einen zunehmenden Abstand zur Nabe (2) besitzenden, Umfanges der Schnecke in Anlage gehalten werden kann.

2. Maschine nach Anspruch 1,
**dadurch gekennzeichnet, dass**
die Nabenachse (2') vertikal angeordnet ist.

3. Maschine nach einem der vorhergehenden Ansprüche,
**dadurch gekennzeichnet, dass**
eine Deckelplatte (7) beabstandet zur Auflagefläche(4') vorhanden ist in einem Abstand gleich oder geringfügig größer als die Dicke (d) des Rohlings (R),

4. Maschine nach einem der vorhergehenden Ansprüche,
**dadurch gekennzeichnet, dass**
eine Transportvorrichtung (12) vorhanden ist, die die wenigstens eine Nabe (2) in einer quer, insbesondere lotrecht, zur Richtung der Nabenachse (2') verlaufenden Transportrichtung (12'), insbesondere entlang einer Führung, antreibt und insbesondere eine Vielzahl von Naben (2) mit darum herum angeordneten Auflageflächen (4') entlang der Transportvorrichtung (12) bewegbar sind, insbesondere unabhängig voneinander bewegbar sind.

5. Maschine nach Anspruch 4,
**dadurch gekennzeichnet, dass**
ein Anschlagelement (8b) mit einer Anschlagfläche (8'b), die vertikal stehend beabstandet zur Nabenachse (2') und parallel zu dieser verlaufend in einem spitzen Winkel zur Transportrichtung (12') verläuft, vorhanden ist.

6. Maschine nach einem der Ansprüche 4 oder 5,
**dadurch gekennzeichnet, dass**
die Transportrichtung (12') eine gebogene, Umlaufrichtung (14'), insbesondere eine Kreisbahn, ist und insbesondere die in Umlaufrichtung von einem Transportantrieb (22) bewegten Naben (2) in einer Wirk-Verbindung mit dem die Umlaufrichtung darstellenden Umfang eines Rundtisches (14) stehen und darauf abrollen.

7. Maschine nach Anspruch 6,
**dadurch gekennzeichnet, dass**
- die Nabe (2) gegenüber ihrem Drehantrieb einen Freilauf besitzt und /oder
- in Vorwärtsrichtung um den Rundtisch (14) in Umlaufrichtung (14') hintereinander beabstandet
- eine Einlegestation (17) zum Einlegen des Rohlings (R) in die Befestigungsvorrichtung (3),
- ein Wickelstation (16) zum Wickeln der Schnecke (S),
- eine Spießstation (15) um Durchspießen der Schnecke (S), und
- eine Auswurfstation (18) zum Auswerfen der Schnecke (S) auf einen Abförderer (13)
vorhanden ist.

8. Maschine nach einem der vorhergehenden Ansprüche,
**dadurch gekennzeichnet, dass**
- sich ein Anschlagelement (8c) mit einer Anschlagfläche (8c') über ein Kreissegment des Rundtisches (14) entlang dessen Umfang erstreckt
und/oder
- ebenso über ein - ggf. unterschiedliches - Kreissegment eine obere Deckelplatte (7).

9. Maschine nach Anspruch 8, **dadurch gekennzeichnet, dass**
in Umlaufrichtung (14') die Deckelplatte (7) stromabwärts eines ersten Anschlagelementes (8a) beginnt und vorzugsweise stromaufwärts des Endes des Anschlagelementes (8c) endet.

10. Maschine nach einem der vorhergehenden Ansprüche,
**dadurch gekennzeichnet, dass**
die Maschine eine Steuerung (20) umfasst, die in der Lage ist, zu erkennen, dass sich die fertig gestellte Schnecke (S) in einer solchen Drehlage befindet, dass die Spießrichtung (6') des einzubringenden Spießes (6) durch den außen liegenden Endbereich der Schnecke (S) verläuft, insbesondere innerhalb der letzten 5 cm des außen liegenden Endbereiches (E1) der Schnecke (S).

11. Maschine nach einem der vorhergehenden Ansprüche,
**dadurch gekennzeichnet, dass**
die Befestigungsvorrichtung (3) aus exzentrisch um die Nabenachse (2') beabstandeten vier oder sechs regelmäßig beabstandeten Haltestiften (3a bis d) besteht, die parallel zur Nabenachse (2') und lotrecht zur Auflagefläche (4') aufragen in einem gegenseitigen Abstand (A1) entsprechend etwas geringer als die Dicke (d) des Bratwurst-Rohlings (R).

12. Maschine nach Anspruch 11,
**dadurch gekennzeichnet, dass**
der Abstand (A1) der Haltestifte (3a bis d) zwischen 40 %und 5 %, besser zwischen 30 % und 10%, besser zwischen 25 %und 15 %; geringer ist als die Dicke (d) des Rohlings (R).

13. **Verfahren** zum Herstellen einer Bratwurst-Schnecke (S) aus einem Bratwurst-Rohling (R), wobei
- der Bratwurst-Rohling (R) an einem inneren Ende (E2) in einer Befestigungsvorrichtung (3) festgehalten wird,
- der Bratwurst-Rohling (R) auf einer Auflageplatte (4) liegend um eine Achse, die lotrecht zur Auflagefläche (4') der Auflageplatte (4) steht, zu einer Bratwurst-Schnecke (S) gedreht wird,
- ein anschließendes Durchspießen der Bratwurst-Schnecke (S) parallel auf deren Mittel-Ebene (S') und durch deren Zentrum erfolgt,
- die Schnecke (S) von der Befestigungsvorrichtung (3) entfernt wird,
**dadurch gekennzeichnet, dass**
- die Bratwurst-Schnecke (S) unter Anlage einer Stelle des äußeren Umfanges an einer sich während des Wickelns einen zunehmenden Abstand zur Nabe (2) besitzenden Anschlagfläche (8b') gedreht wird.

14. Verfahren nach Anspruch 13,
**dadurch gekennzeichnet, dass**
die Schnecke (S) solange gedreht wird, bis das äußere Ende (E1) am Umfang der vorangehenden Lage der Schnecke (S) anliegt und sich dieser Endbereich gegenüberliegend der Einspieß-Position der Schnecke (S) befindet.

15. Verfahren nach Anspruch 13 oder 14,
**dadurch gekennzeichnet, dass**
die Schnecke (S) während des Wickelns zwischen einer Auflagefläche (4') und einer Deckelfläche (7') mit geringem Spiel oder spielfrei gehalten wird.

## Claims

1. A **machine** for producing sausage spirals (S) from a finite sausage blank (R), the machine comprising:
- a hub (2) that is drivable to rotate and including a centrally arranged attachment device (3) on a face (2a) for the blank and the sausage spiral (S) generated therefrom wherein the face is arranged orthogonal to the hub axis (2'),
- a skewering unit (15) for automatically inserting a skewer (6) through the sausage spiral (S),
**characterized in that**
- a contact surface (4') which is not rotating with the hub (2) is provided around the hub (2),
- a contact element (8b) protruding from the contact surface (4') is provided with a variable distance between its contact surface (8b') and the hub (2), whereby the contact element (8b) is held in contact to an area of the outer circumference of the spiral (S), which has an increasing distance to the hub (2) during winding.

2. The machine according to claim 1,
**characterized in that**
the hub axis (2') is arranged vertically.

3. The machine according to one of the preceding claims,
**characterized in that**
a cover plate (7) is provided offset from the contact surface (4') at a distance that is equal to or slightly greater than the thickness of the blank (R).

4. The machine according to one of the preceding claims,
**characterized in that**
a transport device (12) is provided which drives the at least one hub (2) in a transport direction that extends transversal, in particular perpendicular, to the direction of the hub axis (2'), in particular along a support and in particular a plurality of hubs (2) with contact surfaces (4') arranged around are moveable along the transport device (12), in particular moveable independently from each other.

5. The machine according to claim 4,
**characterized in that**
a contact element (8b) is provided that includes a contact surface (8b') that is arranged vertically and offset from the hub axis (2') and extends parallel to the hub axis (2') at an acute angle to the transport direction(12).

6. The machine according to one of the claims 4 or 5,
**characterized in that**
the transport direction (12') is a curved, circumferential direction (14'), in particular a circular path and in particular the hubs (2) moved in the circumferential direction by a transport drive (22) are operatively connected with the circumference of a turn table (14) representing the direction of revolution and roll thereon.

7. The machine according to claim 6,
**characterized in that**
- the hub (2) is attached to its rotation drive by a free-wheeling device,
and/or
- the following elements are provided in circumferential direction (14') about the round table (14) offset behind each other:
- an insertion station (17) for inserting the blank (R) into the attachment device (3),
- a winding station (16) for winding the spiral (S),
- a skewering station (15) for skewering the spiral (S), and
- an ejection station (18) for ejecting the spiral (S) on an extraction conveyor (13).

8. The machine according to one of the preceding claims,
**characterized in that**
- a contact element (8c) with a contact surface (8c') extends over a circular segment of the round table (14) along the circumference of the round table (14),
and/or
- an upper cover plate (7) extends over a circular segment that may be a different circular segment.

9. The machine according to claim 8,
**characterized in that**
the cover plate (7) starts in the circumferential direction (14') downstream of the first stop element (8a) and terminates advantageously upstream of the end of the stop element (8c).

10. The machine according to one of the preceding claims,
**characterized in that**
the machine includes a control (20) which is configured to detect that the finished spiral (S) is in a rotation position so that the skewer direction (6') of the skewer (6) to be inserted extends through an outer end portion of the spiral (S), in particular within the last five centimeters of the outer end portion (E1) of the spiral (S).

11. The machine according to one of the preceding claims,
**characterized in that**
the attachment device (3) is made from four or six support pins (3a - d) that are eccentrically offset about the hub axis (2') and uniformly offset from each other, wherein the support pins (3a - d) protrude parallel to the hub axis (2') and orthogonal to the contact surface (4') with a distance (A1) from each other that is slightly smaller than a thickness (d) of the sausage blank (R).

12. The machine according to claim 11,
**characterized in that**
the distance (A1) of the support pins (3a - d) is between 40% and 5%, better between 30% and 10%, better between 25% and 15% less than the thickness (d) of the blank (R).

13. A **method** for producing a sausage spiral (S) from a sausage blank (R), **characterized in that**
- the sausage blank (R) is fixed with one inner end (E2) at an attachment device (3),
- the sausage blank (R) is rotated lying on a contact plate (4) about an axis transversal, in particular orthogonal, to the contact surface (4') of the contact plate (4)
- subsequent skewering of the spiral (S) parallel to its middle plane (S') and through its center,
- removing the spiral (S) from the attachment device (3)
**characterized in that**
- the spiral (S)is rotated in contact with an area of its outer circumference at a contact surface (8b') having an increasing distance from the hub (2) during winding,

14. The method according to claim 13,
**characterized in that**
the spiral (S)is rotated until its outer end (E1) contacts the circumference of the preceding layer of the spiral (S) and said end portion is arranged opposite to the skewering positon of the spiral (S).

15. The method according to claim 13 or 14,
**characterized in that**
the spiral (S) is supported during winding with little clearance or without clearance between a contact surface (4') and a cover surface (7').

## Revendications

1. **Machine** pour la fabrication d'escargots de saucisse (S) à partir d'une pièce de départ de saucisse (R) finie avec
- un moyeu (2) qui peut être entraîné en rotation et qui présente un dispositif de fixation (3) disposé de manière centrale sur la face frontale (2a) perpendiculaire à l'axe de moyeu (2') pour la pièce de départ (R) et l'escargot de saucisse (S) en résultant,
- une station de brochetage (15) pour pousser automatiquement une broche (6) à travers l'escargot de saucisse (S),
**caractérisé en ce que**
- autour de la face frontale (2a) du moyeu (2) se trouve une surface de support (4') qui est fixe par rapport au moyeu (2),
- un élément de butée (8b) est prévu, dépassant vers le haut de la surface de support (4'), dont la surface de butée (8'a) présente une distance variable au moyeu (2) et peut être maintenu en appui en un point de la circonférence extérieure de l'escargot, laquelle circonférence présente une distance croissante par rapport au moyeu (2) lors de l'enroulement.

2. Machine selon la revendication 1,
**caractérisé en ce que**
l'axe de moyeu (2') est disposé verticalement.

3. Machine selon l'une des revendications précédentes,
**caractérisé en ce que**
une plaque de recouvrement (7) est présente à une distance de la surface de support (4') qui est égale ou légèrement supérieure à l'épaisseur (d) de la pièce de départ (R).

4. Machine selon l'une des revendications précédentes,
**caractérisé en ce que**
un dispositif de transport (12) est prévu, qui entraîne ledit au moins un moyeu (2) dans une direction de transport (12') s'étendant transversalement, en particulier perpendiculairement, à la direction de l'axe de moyeu (2'), en particulier le long d'un guidage, et **en ce qu'**en particulier une pluralité de moyeux (2) avec des surfaces de support (4') disposées autour de ceux-ci peuvent être déplacés, notamment indépendamment les uns des autres, le long du dispositif de transport (12).

5. Machine selon la revendication 4,
**caractérisé en ce que**
un élément de butée (8b) ayant une surface de butée (8'b) qui s'étend en angle aigu par rapport à la direction de transport (12'), espacée verticalement à l'axe du moyeu (2') et s'étendant parallèlement à celui-ci.

6. Machines selon l'une des revendications 4 ou 5,
**caractérisé en ce que**
la direction de transport (12') est une direction de circulation courbée (14'), en particulier une trajectoire circulaire, et **en ce qu'**en particulier les moyeux (2) déplacés dans la direction circulaire par un entraînement de transport (22) sont reliés de manière opérationnelle à la circonférence d'un plateau rotatif (14) représentant la direction circulaire et roulent dessus.

7. Machine selon la revendication 6,
**caractérisé en ce que**
- le moyeu (2) comprend un roulement libre par rapport à son entraînement rotatif et/ou il y a
- vers l'avant autour du plateau rotatif (14) dans la direction de circulation (14') espacés l'un par rapport à l'autre
- une station d'insertion (17) pour insérer la pièce de départ (R) dans le dispositif de fixation (3),
- une station d'enroulement (16) pour enrouler l'escargot (S),
- une station de brochetage (15) pour brocheter l'escargot (S), et
- une station d'éjection (18) pour éjecter l'escargot (S) sur un convoyeur (13).

8. Machine selon l'une des revendications précédentes,
**caractérisé en ce que**
- un élément de butée (8c) avec une surface de butée (8c') s'étend sur un segment circulaire du plateau rotatif (14) le long de sa circonférence et/ou
- également une plaque de recouvrement supérieure (7) sur un segment circulaire - éventuellement différent.

9. Machine selon la revendication 8,
**caractérisé en ce que**
dans la direction de circulation (14'), la plaque de recouvrement (7) commence en aval d'un premier élément de butée (8a) et se termine de préférence en amont de l'extrémité de l'élément de butée (8c).

10. Machine selon l'une des revendications précédentes,
**caractérisé en ce que**
la machine comprend une commande (20) capable de détecter que l'escargot achevé (5) est dans une position de rotation telle que la direction de broche (6') de la broche (6) à introduire s'étend à travers la zone d'extrémité extérieure de l'escargot (S), et est en particulier comprise dans les 5 derniers centimètres de la zone d'extrémité extérieure (E1) de l'escargot (S).

11. Machine selon l'une des revendications précédentes,
**caractérisé en ce que**
le dispositif de fixation (3) se compose de quatre ou six goupilles de retenue (3a à d) qui sont régulièrement espacées excentriquement autour de l'axe de moyeu (2') et qui font saillie parallèlement à l'axe de moyeu (2') et perpendiculairement à la surface de support (4') avec un espacement mutuel (A1) légèrement inférieur à l'épaisseur (d) de la pièce de départ de saucisse (R).

12. Machine selon la revendication 11,
**caractérisé en ce que**
la distance (A1) entre les goupilles de retenue (3a à d) est de 40% à 5%, mieux de 30% à 10%, mieux de 25% à 15% inférieure à l'épaisseur (d) de la pièce de départ (R).

13. **Procédé de production** d'un escargot de saucisse (S) à partir d'une pièce de départ de saucisse (R), où
- la pièce de départ de saucisse (R) est maintenue en place à une extrémité intérieure (E2) dans un dispositif de fixation (3),
- la pièce de départ de saucisse (R), reposant sur une plaque de support (4) est enroulée en escargot de saucisse (S) autour d'un axe, perpendiculaire à la surface de support (4') de la plaque de support (4),
- l'escargot de saucisse (S) est puis mis en brochette en parallèle à son plan central (S') et à travers son centre,
- l'escargot (S) est retirée du dispositif de fixation (3),
**caractérisé en ce que**
- l'escargot de saucisse (S) est alors tourné, en appui d'un site de la circonférence extérieure contre une surface de butée (8b') ayant une distance croissante au moyeu (2) pendant l'enroulement.

14. Procédé selon la revendication 13,
**caractérisé en ce que**
l'escargot (S) est tourné jusqu'à ce que l'extrémité extérieure (E1) soit en appui contre la circonférence de la position précédente de l'escargot (S) et que cette zone d'extrémité (S) soit opposée à la position de mise en brochette de l'escargot (S).

15. Procédé selon la revendication 13 ou 14,
**caractérisé en ce que**
l'escargot (S) est maintenue avec peu de jeu ou sans jeu pendant l'enroulement entre une surface de support (4') et une surface de recouvrement (7).
